# EUROPÄISCHE PATENTSCHRIFT

(11) **EP 2 620 714 B1**
(45) Veröffentlichungstag und Bekanntmachung des Hinweises auf die Patenterteilung: **14.09.2016**
(21) Anmeldenummer: 13150783.2
(22) Anmeldetag: 10.01.2013
(51) Int. Cl.: F24F 11/047, F24F 13/14, F24F 13/18, G05D 7/01

(54) **Lüftungsvorrichtung für Räume**
Ventilating apparatus for rooms
Dispositif d' aération pour espaces

(30) Priorität: 24.01.2012 DE 202012000618 U
(43) Veröffentlichungstag der Anmeldung: 31.07.2013
(73) Patentinhaber: SIEGENIA-AUBI KG, 57234 Wilnsdorf (DE)
(72) Erfinder: Zander, Nils, 49811 Lingen (DE)

(56) Entgegenhaltungen:
- EP-B1- 1 568 947
- EP-B1- 2 051 020
- BE-A5- 1 011 024
- DD-A1- 227 209

## Beschreibung

Die Erfindung betrifft eine Lüftungsvorrichtung für Räume nach dem Oberbegriff des Anspruchs 1.

Eine derartige Lüftungsvorrichtung ist bereits bekannt. Aus der EP 2051020 B1 ist eine Lüftungsvorrichtung zum Steuern eines Luftstroms durch einen Luftkanal bekannt geworden, mit einem Gehäuse, einem Einlass und einem Auslass. Die Lüftungsvorrichtung umfasst dabei ein selbstregulierendes Ventil mit einer Membran, wobei der Volumenstrom durch die Differenz zwischen dem Druck am Einlass und dem Druck am Auslass bestimmt wird. Das, selbstregulierende Ventil ist dabei drehbar auf einem Träger angeordnet, so dass eine schwenkbar beaufschlagte Membran unter dem Einfluss einer steigenden Druckdifferenz zwischen einem minimalen und einem maximalen Drehwinkel über einen Zwischendrehwinkel drehen kann und wobei der Zwischendrehwinkel zwischen dem minimalen und dem maximalen Winkel liegt. Die Membran ist mit einem in den minimalen Drehwinkel zurückstellenden Gegengewicht versehen. Innerhalb eines Winkelbereichs zwischen dem Zwischendrehwinkel und dem maximalen Drehwinkel unter dem Einfluss einer steigenden Druckdifferenz wirkt eine elastische Widerstandskraft, die durch einen Kontakt zwischen einem Teil des Gehäuses und einem elastischen Mittel erzeugt wird, welches ein Teil des Gegengewichts oder der Membran bildet und an diesem montiert ist und dass das elastische Mittel ein Teil des Gegengewichts oder der Membran umfasst, der aus einem elastischen Material gebildet ist.

Aus der EP 1568947 B1 ist eine Ausgestaltung einer Lüftungsvorrichtung zur Regelung des Luftdurchsatzes bekannt geworden, mit einem Luftkanal und einer dazu beweglichen und unabhängig arbeitenden Klappe, durch welche die Luftstromöffnung automatisch in Abhängigkeit von der Druckdifferenz zwischen der Eintrittsöffnung und der Austrittsöffnung des Luftkanals eingestellt wird. Dabei wird die Klappe bei einem Anstieg der Druckdifferenz in dem Luftkanal bewegt, indem sie sich zunächst bis zu einem maximalen Drehwinkel um einen freien Aufhängepunkt dreht und sich anschließend ohne weiterer Drehung um den freien Aufhängepunkt verformt.

Nachteilig dabei ist es, dass die Ausgestaltungen der EP 2051020 B1 und EP 1568947 B1 mindestens zwei unterschiedliche Materialien bzw. Bauteile zur Regulierung des Luftstroms benötigen, sodass sich die Lüftungsvorrichtungen insbesondere die Luftregulierungsklappen als aufwendig in der Herstellung erweisen und sich nachteilig auf die Kosten auswirken.
Ferner besteht beim Einsatz mehrerer Materialien bzw. Bauteilen auch die Gefahr durch Verkettung von Toleranzabweichungen oder unterschiedlicher Materialzusammensetzungen, dass die Lüftungsvorrichtungen bei gleicher Ausführung unterschiedliche Druckdifferenzwerte aufweisen können.

Eine der EP 1568947 B1 und EP 2501020 B1 ähnliche Ausgestaltung geht ebenfalls aus der DD 227209 A1 hervor.

Durch die DD 227209 A1 ist eine Lüftungsvorrichtung bekannt geworden, mit einer Regelungsklappe zur Begrenzung des Luftvolumenstromes von Räumen oder lufttechnischen Anlagen. Dabei ist in einem Luftkanal eine abgewinkelte gleichschenklige Klappe waagerecht in ihrer Innenkante drehbar gelagert, wobei sich stromabwärts der Klappe an der Oberseite des Kanals ein rechtwinkliger Anschlag befindet. Der Anschlag und die Drehachse sind dabei so angeordnet, dass der Strömungsquerschnitt durch Drehen der Klappe verschlossen werden kann.

Der Erfindung liegt daher die Aufgabe zugrunde, bei einfachem Aufbau und kostengünstiger Herstellung eine Lüftungsvorrichtung zur Begrenzung des Luftstroms bereitzustellen, die den Luftstrom in bestimmten Bereichen konstant hält und die damit eine verbesserte Kontrolle des Luftstroms ermöglicht, und dabei alle voran beschriebenen Nachteile beseitigt.

Die Lösung dieser Aufgabe gelingt mit den Mitteln des kennzeichnenden Teils des Anspruchs 1.

Dadurch, dass die Lüftungsvorrichtung ein Gehäuse und ein zur Luftführung des Luftstroms führenden Luftkanal enthält und der Luftkanal wiederum durch eine selbstregulierende Klappe die Differenz zwischen dem Druck der Eintrittsöffnung und dem Druck der Austrittsöffnung bestimmt, welche mit dem Luftkanal mittels Form- und/oder Kraftschlussverbindungen kuppelbar ist, erfolgt eine klare Trennung zwischen dem Luftkanal und der Klappe enthaltenen Bauteilekomponenten. Es entsteht dadurch eine selbstregulierende Klappe, die unabhängig von den der Lüftungsvorrichtung enthaltenen Bauteilen in der Formgebung und der Materialwahl frei gestaltet werden kann.

Eine vorteilhafte Weiterbildung sieht vor, dass die Klappe in Längsrichtung von der Drehachse des Aufhängepunktes tordiert, also abgewendelt geformt ist, und die elastische Widerstandskraft von einem Drehausgangswinkel bis zu einem maximalen Drehwinkel durch den Kontakt zwischen einem Teil des Lüftungskanals und der Klappe erzeugt wird. Der Aufhängepunkt bildet gleichzeitig die Drehachse der Klappe. Zur Bildung des größtmöglichen Luftstroms, ist eine Verdrehung um die Drehachse der Klappe über die gesamte Länge gebildet.

Ferner ist vorgesehen, dass sich die Klappe von dem Aufhängepunkt in zwei Schenkel aufteilt, wobei zumindest ein Schenkel ausgehend vom Drehausgangswinkel punktuell oder mit einem Abschnitt gegenüber der Länge der Klappe am Luftkanal nahezu Widerstandsfrei anliegt und wobei der andere überwiegende Teil der Klappe in Längsrichtung von dem Luftkanal beabstandet ist und eine Luftdurchlassöffnung bildet. Es hat sich gezeigt, dass über den Kontakt der Klappe zum Luftkanal der Luststrom regelbar ist, sodass mit einer entstehenden Druckdifferenz der Luftstrom über die Klappe gesteuert durch den Luftkanal führt. Eine solche Einstellung gelingt mit der Wahl des Materials oder über die Materialstärke der Klappe. Selbst geringste Druckdifferenzen werden durch die Ausgestaltung erkannt und durch die Klappe entsprechend ausgeglichen. Ferner passen sich die Schenkel dem Bauraum des Luftkanals an.

Je nach Bedarf des Luftaustauschs kann der Luftkanal in der Größe variieren. Dem zur Folge ist die Klappe der Größe des Luftkanals entsprechend anzupassen und kann in die Lüftungsvorrichtung integriert werden.

Damit die Komponenten des Gehäuses und der Klappe der Lüftungsvorrichtung gemeinsam unverlierbar gekoppelt sind und den Anforderungen an die Leistungsfähigkeit zur Regulierung des Luftstroms uneingeschränkt genüge tun, ist der eine Schenkel in dem Luftkanal angeordnet, wobei der andere Schenkel in eine zum Luftkanal hin offene Mulde eintaucht.

Um automatisch bei einem Anstieg der Druckdifferenz einen direkten Ausgleich des Luftdrucks zu erreichen, ist auf einfache Weise vorgesehen, dass sich die Klappe bei einem Anstieg der Druckdifferenz in dem Luftkanal mit abnehmender Torsion zunehmend verformt, wobei sich dabei die Luftdurchlassöffnung kontinuierlich verkleinert. Mit zunehmender Verformung steigt die Federkraftbeaufschlagung der Klappe, sodass bei abnehmender Druckdifferenz die Klappe automatisch die ursprüngliche Position eingeht.

Vorzugsweise ist die Klappe eine dünnwandige Platte, die eine im Querschnitt abgewinkelte Aufhängung aufweist und aus einem Kunststoffmaterial hergestellt ist. Durch den einfachen Aufbau und der einteiligen Variante, ergeben sich herstellungstechnische Vorteile und eine kostengünstige Ausgestaltung. Außerdem bewirkt das Kunststoffmaterial eine Schalldämmung, so dass ein eintretender Schall absorbiert wird.

Um eine einfache Montage zu gewährleisten ist vorgesehen, dass die Aufhängung im Querschnitt hakenartig ausgebildet ist und ein Kreissegment aufweist. Die Klappe kann ohne aufzunehmenden Kraftaufwand in eine Aufnahmeeinrichtung der Lüftungsvorrichtung eingedreht werden und wird durch einen Hintergriff, der sich durch die hakenartige Ausgestaltung bildet funktionsfähig im Luftkanal formschlüssig gehalten.

Eine weitere Montageerleichterung ergibt sich dadurch, dass der Luftkanal oder das Gehäuse der Lüftungsvorrichtung die Aufnahmeeinrichtung mit einem Kreissegment aufweist, in welche die Aufhängung eindrehbar ist, und den Aufhängepunkt bilden und so einen lösbaren Formschlusseingriff eingehen. Vorzugsweise sind die Kreissegmente der Aufhängung und der Aufnahmeeinrichtung in Übereinstimmung mit geringem Spiel beabstandet angepasst, um einen reibungslosen Montageeinlauf zu erreichen und klappernde Geräusche zu vermeiden.

Es ist zudem vorteilhaft, wenn die Aufnahmeeinrichtung ein Endanschlag zur Begrenzung der Drehbewegung aufweist. Der Endanschlag signalisiert die korrekte Einbauposition der Klappe.

Weitere Vorteile der Erfindung ergeben sich aus den Zeichnungen. Es zeigen:
- Fig. 1: eine Ansicht einer Lüftungsvorrichtung nach Art einer Schnittdarstellung in einer Seitenansicht,
- Fig. 2: einen vergrößerten Abschnitt der Lüftungsvorrichtung mit einer Klappe in einer Ansicht nach Figur 1 und
- Fig. 3: eine vergrößerte Detailansicht der Lüftungsvorrichtung in einer Schnittdarstellung der Figur 1 mit einer Klappe in einer weiteren Ausführungsvariante.

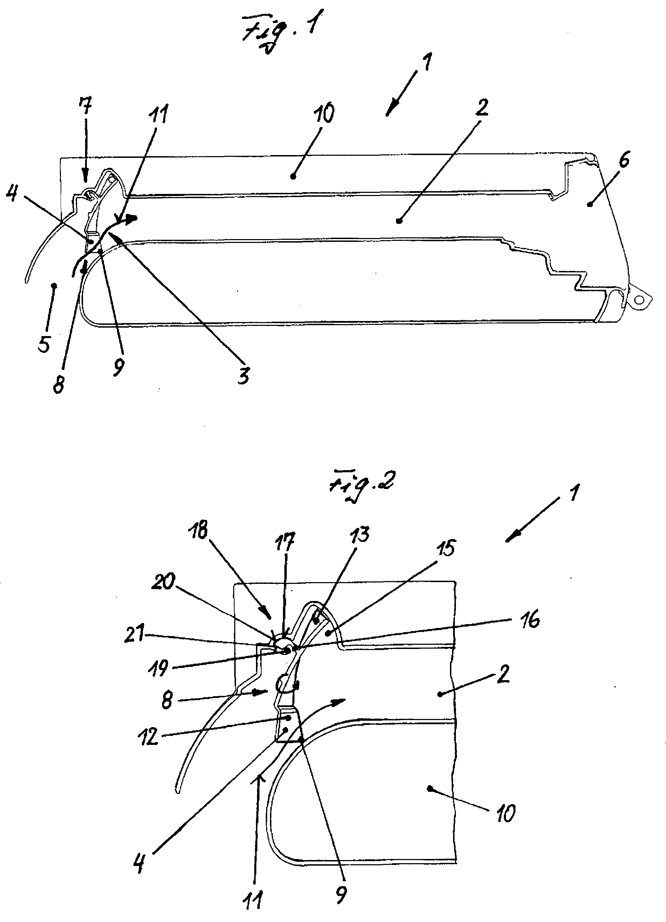

In der Schnittdarstellung nach Fig.1 ist die Lüftungsvorrichtung 1 zur Regulierung des Luftdurchsatzes in einer Lüftungsanlage dargestellt, umfassend einen Luftkanal 2 und einer beweglichen und unabhängig arbeitenden Klappe 3, durch welche die Luftdurchgangsöffnung 4 für den Luftstrom 11 automatisch, in Abhängigkeit von der Druckdifferenz zwischen einer Eintrittsöffnung 5 und einer Austrittsöffnung 6 des Luftkanals 2 eingestellt wird, wobei die Klappe 3 um einen waagerechten Aufhängepunkt 7 im Luftkanal 2 aufgehängt ist. Bei einem Anstieg der Druckdifferenz in dem Luftkanal 2 bewegt sich die Klappe 3 unter dem Einfluss einer elastischen Widerstandskraft gegen die Drehbewegung.

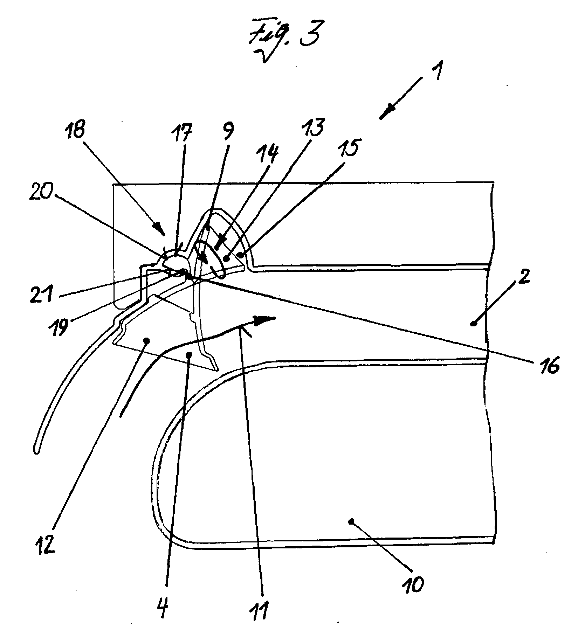

Dadurch, dass die Klappe 3 in Längsrichtung von der Drehachse les Aufhängepunktes 7 nach Fig. 2 und Fig. 3 tordiert, d.h. gewendelt ausgebildet ist, wird die elastische Widerstandskraft durch Verdrehung um den Aufhängepunkt 7 von einem Drehausgangswinkel 8 bis zu einem maximalen Drehwinkel 9 und den Kontakt zwischen einem Teil des Luftkanals 2 und der Klappe 3 erzeugt. Der Aufhängepunkt 7 bildet gleichzeitig die Drehachse der Klappe 3. Zur Erreichung des größtmöglichen Luftstroms 11, ist die Klappe 3 über die gesamte Länge um die Drehachse verdreht.

Nach Fig. 1 wird die Lüftungsvorrichtung 1 durch ein Gehäuse 10 und den zur Luftführung des Luftstroms 11 führenden Luftkanal 2 gebildet, der wiederum die selbstregulierende Klappe 3 enthält, welche die Differenz zwischen dem Druck der Eintrittsöffnung 5 und dem Druck der Austrittsöffnung 6 bestimmt.

Die Klappe 3 ist nach Fig. 1 bis Fig. 3 mit dem Luftkanal 2 mittels Form- und/oder Kraftschlussverbindungen kuppelbar, wobei eine klare Trennung zwischen dem Luftkanal 2 und der Klappe 3 enthaltenen Bauteilekomponenten erfolgt. Es entsteht dadurch eine selbstregulierende Klappe 3, die unabhängig von den Bauteilen der Lüftungsvorrichtung 1 in der Formgebung und der Materialwahl frei gestaltet werden kann.

Die Klappe 3 teilt sich ausgehend von dem Aufhängepunkt 7 in zwei Schenkel 12, 13 auf, wobei ein Schenkel 12 ausgehend vom Drehausgangswinkel 14 nach Fig. 2 oder Fig. 3 punktuell oder mit einem Abschnitt gegenüber der Länge der Klappe 3 am Luftkanal 2 nahezu Widerstandsfrei anliegt und wobei der andere überwiegende Teil der Klappe 3 in Längsrichtung von dem Luftkanal 2 beabstandet ist und die Luftdurchlassöffnung 4 bildet.

Damit die Komponenten des Gehäuses 10 und der Klappe 3 der Lüftungsvorrichtung 1 gemeinsam unverlierbar gekoppelt sind und den Anforderungen an die Leistungsfähigkeit zur Regulierung des Luftstroms 11 uneingeschränkt genüge tun, ist der eine Schenkel 12 in dem Luftkanal 2 angeordnet. Der andere Schenkel 13 taucht hingegen in eine zum Luftkanal 2 offene Mulde 15 ein.

Über den Kontakt der Klappe 3 zum Luftkanal 2 ist der Luftstrom 11 regelbar, sodass mit einer entstehenden Druckdifferenz der Luftstrom 11 über die Klappe 3 gesteuert durch den Luftkanal 2 geführt wird. Eine solche Einstellung gelingt mit der Wahl des Materials oder über die Materialstärke der Klappe 3. Selbst geringste Druckdifferenzen werden durch die Ausgestaltung erkannt und durch die Klappe 3 entsprechend ausgeglichen. Ferner passen sich die Schenkel 12, 13 dem Bauraum des Luftkanals 2 an.

Je nach Bedarf des Luftaustauschs kann der Luftkanal 2 in der Größe variieren. Dem zur Folge ist die Klappe 3 der Größe entsprechend anzupassen und kann in die Lüftungsvorrichtung 1 integriert werden.

Um automatisch bei einem Anstieg der Druckdifferenz einen direkten Ausgleich des Luftdrucks zu erreichen, ist auf einfache Weise vorgesehen, dass sich die Klappe 3 bei einem Anstieg der Druckdifferenz in dem Luftkanal 2 mit abnehmender Torsion mit Pfeildarstellung nach Fig. 2 oder Fig. 3 zunehmend verformt, wobei sich dabei die Luftdurchlassöffnung 4 kontinuierlich verkleinert. Mit zunehmender Verformung steigt die Federkraftbeaufschlagung der Klappe 3, sodass bei abnehmender Druckdifferenz die Klappe 3 automatisch die ursprüngliche Position eingeht.

Vorzugsweise ist die Klappe 3 eine dünnwandige Platte, die eine im Querschnitt abgewinkelte Aufhängung 16 aufweist und aus einem Kunststoffmaterial hergestellt ist. Durch den einfachen Aufbau und der einteiligen Variante, ergeben sich herstellungstechnische Vorteile und eine kostengünstige Ausgestaltung. Außerdem bewirkt das Kunststoffmaterial eine Schalldämmung, so dass ein eintretender Schall absorbiert wird.

Zur einfachen Montage der Klappe 3 ist vorgesehen, dass die Aufhängung 16 im Querschnitt hakenartig ausgebildet ist und ein Kreissegment 17 aufweist. Die Klappe 3 kann ohne aufzunehmenden Kraftaufwand in eine Aufnahmeeinrichtung 18 der Lüftungsvorrichtung 1 eingedreht werden und wird durch einen Hintergriff 19, der sich durch die hakenartige Ausgestaltung bildet funktionsfähig im Luftkanal 2 formschlüssig gehalten.

Zum vereinfachten Eindrehen der Klappe 3 in die Aufnahmeeinrichtung 18 des Luftkanals 2 oder des Gehäuses 10 ist ein Teil der Aufnahmeeinrichtung 18 mit einem Kreissegment 20 ausgebildet. Die Aufhängung 16 ist in die Aufnahmeeinrichtung 18 eindrehbar. Zur vereinfachten Kupplung der Klappe 3 in die Aufnahmeeinrichtung 18, ist das Kreissegment 17 der Aufhängung 16 und das Kreissegment 20 der Aufnahmeeinrichtung 18 kongruent verlaufend mit geringem Spiel beabstandet angepasst, um einen reibungslosen Montageeinlauf zu erreichen und klappernde Geräusche zu vermeiden. Dabei bildet die Aufhängung 16 und der Aufnahmeeinrichtung 18 bei vollständigem Eindrehen ein Formschlusseingriff. Ein Endanschlag 21 in der Aufnahmeeinrichtung 18 begrenzt die Drehbewegung bei der Montage und signalisiert die korrekte Einbauposition der Klappe 3.

### Bezugszeichenliste

- 1: Lüftungsvorrichtung
- 2: Luftkanal
- 3: Klappe
- 4: Luftdurchgangsöffnung
- 5: Eintrittsöffnung
- 6: Austrittsöffnung
- 7: Aufhängepunkt
- 8: Drehausgangswinkel
- 9: Kontakt
- 10: Gehäuse
- 11: Luftstrom
- 12: Schenkel
- 13: Schenkel
- 14: Drehausgangswinkel
- 15: Mulde
- 16: Aufhängung
- 17: Kreissegment
- 18: Aufnahmeeinrichtung
- 19: Hintergriff
- 20: Kreissegment
- 21: Endanschlag

## Patentansprüche

1. Lüftungsvorrichtung (1) zur Regulierung des Luftdurchsatzes in einer Lüftungsanlage, umfassend einen Luftkanal (2) mit einer beweglichen und unabhängig arbeitenden Klappe (3), durch welche die Luftdurchgangsöffnung (4) für den Luftstrom (11) automatisch, in Abhängigkeit von der Druckdifferenz zwischen einer Eintrittsöffnung (5) und einer Austrittsöffnung (6) des Luftkanals (2) eingestellt wird, wobei die Klappe (3) um einen waagerechten Aufhängepunkt (7), der gleichzeitig die Drehachse der Klappe (3) bildet, im Luftkanal (2) aufgehängt ist und dass sich die Klappe (3) bei einem Anstieg der Druckdifferenz in dem Luftkanal (2) unter dem Einfluss einer elastischen Widerstandskraft gegen die Drehbewegung bewegt,
**dadurch gekennzeichnet,**
**dass** die Klappe (3) in Längsrichtung von der Drehachse des Aufhängepunktes (7) tordiert und die elastische Widerstandskraft von einem Drehausgangswinkel (8, 14) bis zu einem maximalen Drehwinkel durch einen Kontakt (9) zwischen einem Teil des Luftkanals (2) und der Klappe (3) erzeugt wird.

2. Lüftungsvorrichtung nach Anspruch 1,
**dadurch gekennzeichnet,**
**dass** sich die Klappe (3) von dem Aufhängepunkt (7) in zwei Schenkel (12, 13) aufteilt, wobei zumindest ein Schenkel (12) ausgehend vom Drehausgangswinkel (8, 14) punktuell oder mit einem Abschnitt gegenüber der Länge der Klappe (3) am Luftkanal (2) nahezu Widerstandsfrei anliegt und wobei der andere überwiegende Teil der Klappe (3) in Längsrichtung von dem Luftkanal (2) beabstandet ist und die Luftdurchlassöffnung (4) bildet.

3. Lüftungsvorrichtung nach Anspruch 2,
**dadurch gekennzeichnet,**
**dass** der eine Schenkel (12) in dem Luftkanal (2) angeordnet ist und der andere Schenkel (13) in eine zum Luftkanal (2) hin offene Mulde (15) eintaucht.

4. Lüftungsvorrichtung nach Anspruch 1 bis 2,
**dadurch gekennzeichnet,**
**dass** sich die Klappe (3) bei einem Anstieg der Druckdifferenz in dem Luftkanal (2) mit abnehmender Torsion zunehmend verformt und sich die Luftdurchlassöffnung (4) verkleinert.

5. Lüftungsvorrichtung nach Anspruch 1,
**dadurch gekennzeichnet,**
**dass** die Klappe (3) vorzugsweise eine dünnwandige Platte ist, mit einer im Querschnitt abgewinkelten Aufhängung (16) und aus einem Kunststoffmaterial hergestellt ist.

6. Lüftungsvorrichtung nach Anspruch 5,
**dadurch gekennzeichnet,**
**dass** die Aufhängung (16) im Querschnitt hakenartig ausgebildet ist und ein Kreissegment (17) aufweist.

7. Lüftungsvorrichtung nach Anspruch 1 und 5,
**dadurch gekennzeichnet,**
**dass** der Luftkanal (2) eine Aufnahmeeinrichtung (18) mit einem Kreissegment (20) aufweist, in welche die Aufhängung (16) eindrehbar ist, und den Aufhängepunkt (7) bilden.

8. Lüftungsvorrichtung nach Anspruch 7,
dass die Aufnahmeeinrichtung (18) ein Endanschlag (21) zur Begrenzung der Drehbewegung aufweist.

## Claims

1. Ventilating apparatus (1) for regulating the air throughput in a ventilation system, comprising an air channel (2) with a moving and independently functioning flap (3), by means of which the air passage opening (4) for the air flow (11) is adjusted automatically, as a function of the pressure difference between an inlet opening (5) and an outlet opening (6) of the air channel (2), wherein the flap (3) is suspended in the air channel (2) about a horizontal suspension point which simultaneously forms the axis of rotation of the flap (3), and, with a rise in the pressure difference in the air channel (2), the flap (3) moves under the influence of an elastic resistance force against the rotational movement,
**characterized in that**
the flap (3) twists in the longitudinal direction of the axis of rotation of the suspension point, and the elastic resistance force is produced from an initial rotation angle (8, 14) to a maximum rotation angle by means of a contact (9) between a part of the air channel (2) and the flap (3).

2. Ventilating apparatus according to claim 1,
**characterized in that**
the flap (3) is divided from the suspension point (7) into two limbs (12, 13), wherein at least one limb (12), starting from the initial rotation angle (8, 14) is in contact at points or with a section at the air channel (2) opposite the length of the flap (3) almost resistance-free, and wherein the other preponderant part of the flap (3) is arranged at a distance spacing from the air channel (2) in the longitudinal direction, and forms the air passage opening (4).

3. Ventilating apparatus according to claim 2,
**characterized in that**
the one limb (12) is arranged in the air channel (2) and the other limb (13) dips into a trough (15) which is open towards the air channel (2).

4. Ventilating apparatus according to claims 1 to 2,
**characterized in that**
in the event of a rise in the pressure difference in the air channel (2), the flap (3) is increasingly deformed as the torsion decreases, and the air passage opening (4) becomes smaller.

5. Ventilating apparatus according to claim 1,
**characterized in that**
the flap (3) is preferably a thin-walled plate, with a suspension piece (16) which is angled in cross-section and is made from a plastic material.

6. Ventilating apparatus according to claim 5,
**characterized in that**
the suspension piece (16) is configured as hook-shaped in cross-section, and comprises a segment of circle (17).

7. Ventilating apparatus according to claims 1 and 5,
**characterized in that**
the air channel (2) comprises an accommodation facility (18) with a segment of circle (20), into which elements the suspension piece (16) can be rotated, and which form the suspension point (7).

8. Ventilating apparatus according to claim 7,
*(characterized in that)*
the accommodation facility (18) comprises an end stop (21) for delimiting the rotational movement.

## Revendications

1. Dispositif d'aération (1) pour la régulation du débit d'air dans une installation d'aération, comprenant un canal d'aération (2), doté d'un clapet (3) mobile et fonctionnant indépendamment, par lequel l'ouverture de passage (4) du flux d'air (11) est réglée automatiquement en fonction de la différence de pression entre une ouverture d'entrée (5) et une ouverture de sortie (6) du canal d'aération (2), sachant que le clapet (3) est suspendu, dans le canal d'aération (2), à un point de suspension (7) horizontal, qui forme simultanément l'axe de rotation du clapet (3), et que le clapet (3), lors d'une élévation de la différence de pression dans le canal d'aération (2), est mû sous l'influence d'une force de résistance élastique contre le mouvement de rotation,
**caractérisé en ce que** le clapet (3) se tord dans la direction longitudinale de l'axe de rotation du point de suspension (7) et que la force de résistance élastique est générée à partir d'un angle de départ de rotation (8, 14) jusqu'à un angle maximal de rotation, par la mise en contact (9) entre une partie du canal d'aération (2) et le clapet (3).

2. Dispositif d'aération selon la revendication 1,
**caractérisé en ce que** le clapet (3) est divisé en deux branches (12, 13), à partir du point de suspension (7), sachant qu'au moins l'une des branches (12), à partir de l'angle de départ de rotation (8, 14), porte ponctuellement ou par sections, presque sans résistance, contre le canal d'aération (2), par rapport à la longueur du clapet (3), et sachant que l'autre partie prépondérante du clapet (3) est distancée du canal d'aération (2), dans la direction longitudinale, et forme l'ouverture de passage d'air (4).

3. Dispositif d'aération selon la revendication 2,
**caractérisé en ce que** l'une des branches (12) est disposée dans le canal d'aération (2) et que l'autre branche (13) plonge dans une incursion (15) qui est ouverte vers le canal d'aération (2).

4. Dispositif d'aération selon l'une des revendications 1 à 2,
**caractérisé en ce que,** lors d'une élévation de la différence de pression dans le canal d'aération (2), le clapet (3) se déforme progressivement, en torsion décroissante, et que l'ouverture de passage d'air (4) diminue.

5. Dispositif d'aération selon la revendication 1,
**caractérisé en ce que** le clapet (3) consiste de préférence en une plaque de faible épaisseur, avec un dispositif de suspension (16) présentant une section transversale coudée, et qu'il est fabriqué en matière synthétique.

6. Dispositif d'aération selon la revendication 5,
**caractérisé en ce que** le dispositif de suspension (16) est doté d'une section transversale en forme de crochet et présente un segment circulaire (17).

7. Dispositif d'aération selon l'une des revendications 1 à 5,
**caractérisé en ce que** le canal d'aération (2) est doté d'une installation de réception (18) présentant un segment circulaire (20), dans laquelle le dispositif de suspension (16) peut être installé, et qui forme le point de suspension (7).

8. Dispositif d'aération selon la revendication 7,
**caractérisé e n ce que** l'installation de réception (18) est dotée d'une butée de fin de course (21) qui est destinée à limiter le mouvement de rotation.
